# EUROPEAN PATENT APPLICATION

(11) **EP 1 965 488 A2**
(43) Date of publication of application: **03.09.2008**
(21) Application number: 08101326.0
(22) Date of filing: 06.02.2008
(51) Int. Cl.: H02M 7/06, H02M 7/08

(54) **AC-DC power converter**

(30) Priority: 28.02.2007 JP 2007048492
(71) Applicant: Sanden Corporation, Isesaki-shi, Gunma 372-8502 (JP)
(72) Inventor: Takada, Kouhei, Isesaki-shi Gunma 372-8502 (JP); MACHIDA, Mikoto, Isesaki-shi Gunma 372-8502 (JP)
(74) Representative: Haley, Stephen

(57) **Abstract**

The present invention provides a power converter apparatus which reduces power loss in a diode bridge element in order to achieve energy saving. The power converter apparatus is equipped with two diode bridge elements 110 and 120, and reduces power loss in respective diodes 115 to 118, and 125 to 128 by connecting two input terminals 111 and 112 of the one diode bridge element 110 to one AC input terminal 101 of the power converter apparatus 100, connecting two input terminals 121 and 122 of the another diode bridge element 120 to another AC input terminal 102, connecting a positive pole output terminal 103 to respective positive pole output terminals 113 and 123 of the two diode bridge elements 110 and 120 and a positive electrode terminal of a capacitor 130, and connecting a negative pole output terminal 104 to respective negative pole output terminals 114 and 124 of the two diode bridge elements 110 and 120, and a negative electrode terminal of the capacitor 130.

## Description

The present invention relates to a power converter apparatus which can be applied to power supply units of various electric equipments, and which converts an inputted AC power into DC power and outputs it.

Heretofore, as this kind of apparatus, for example, a power converter apparatus disclosed in Japanese Patent Publication 7-31153 (Patent Document 1) and a power supply circuit disclosed in Japanese Patent Publication 2003-348846 (Patent Document 2) are known.

The power converter apparatus disclosed in Patent Document 1 connects two half wave switching circuits after performing full wave rectification using a full wave rectifier circuit which is constructed of a diode bridge element, and opens and closes these half wave switching circuits to generate a high-frequency voltage.

The power supply circuit disclosed in Patent Document 2 applies AC power to a primary winding of a transformer, connects a full wave rectifier circuit, which is constructed of a diode bridge element, to a secondary winding of the transformer to perform full wave rectification of the AC power, and thereafter, smoothes this to obtain DC power.

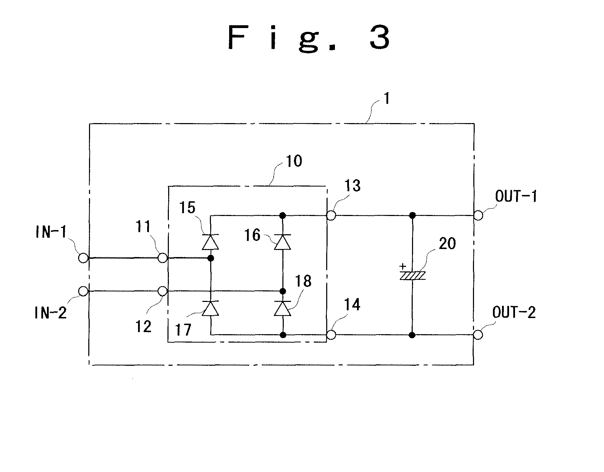

In this way, when AC power is converted into DC power, for example, as a power converter apparatus 1 shown in FIG. 3, it is general to perform full wave rectification of AC power using a diode bridge element 10, and thereafter, to perform smoothing by a capacitor 20.

That is, the power converter apparatus 1 shown in FIG. 3 comprises the diode bridge element 10 and the capacitor 20.

The diode bridge element 10 has two input terminals 11 and 12 and two output terminals 13 and 14 outside, and has four diodes 15 to 18 inside as generally known. One input terminal 11 is connected to an anode of the diode 15, and a cathode of the diode 17, another input terminal 12 is connected to an anode of the diode 16, and a cathode of the diode 18, a positive pole output terminal 13 is connected to cathodes of the diodes 15 and 16, and a negative pole output terminal 14 is connected to anodes of the diodes 17 and 18.

In addition, one input terminal IN-1 of the power converter apparatus 1 is connected to one input terminal 11 of the diode bridge element 10, and another input terminal 12 is connected to another input terminal 12 of the diode bridge element 10.

Furthermore, a positive pole output terminal OUT-1 of the power converter apparatus 1 is connected to a positive pole output terminal 13 of the diode bridge element 10, and a positive electrode terminal of the capacitor 20, and a negative pole output terminal OUT-2 of the power converter apparatus 1 is connected to a negative pole output terminal 14 of the diode bridge element 10, and a negative electrode terminal of the capacitor 20.

Nevertheless, as shown in FIG. 3, when the diode bridge element 10 is used simply, a full load current flows through one diode bridge element 10, and hence, comparatively large power loss arises inside the diode bridge element 10.

That is, power loss in the diode bridge element 10 is determined approximately by a product of a current value (forward current value) which flows in one of the diodes 14 to 18 inside the element, and a drop voltage (forward voltage) of the diode which is determined by the current value. For this reason, when the forward current increases, the forward voltage increases in connection with this, and in consequence, the power loss in the diode increases.

Therefore, in order to reduce the power loss in the diode bridge element 10, it becomes a key how the forward current is reduced, but, since load power is determined in a usual case, it was hard to reduce the power loss in the diode bridge element 10 by an ordinary use method.

The present invention is made in view of the above-described problems, and aims at providing a power converter apparatus which reduces power loss in a diode bridge element in order to achieve energy saving in various electric equipments.

In order to attain the above-mentioned object, the present invention proposes a power converter apparatus which converts AC power into DC power by performing full wave rectification of AC power, applied to a first AC input terminal and a second AC input terminal, by a diode bridge element, comprising first and second diode bridge elements which have first and second input terminals, a positive pole output terminal, and a negative pole output terminal, wherein the first input terminal and second input terminal of the first diode bridge element are connected to the first AC input terminal, wherein the first input terminal and second input terminal of the second diode bridge element are connected to the second AC input terminal, wherein the positive pole output terminal of the first diode bridge element and the positive pole output terminal of the second diode bridge element are connected, and wherein the negative pole output terminal of the first diode bridge element and the negative pole output terminal of the second diode bridge element are connected.

In the power converter apparatus of the present invention, two diodes inside the first diode bridge element are parallel-connected between the first AC input terminal and the positive pole output terminal, and other two diodes inside the first diode bridge element are parallel-connected between the first AC input terminal and the negative pole output terminal. Furthermore, two diodes inside the second diode bridge element are parallel-connected between the second AC input terminal and the positive pole output terminal, and other two diodes inside the second diode bridge element are parallel-connected between the second AC input terminal and the negative pole output terminal. Thereby, let two diodes, which are parallel-connected, be a set, and four sets of these are connected for a diode bridge circuit to be formed.

In addition, in order to attain the above-mentioned object, the present invention proposes a power converter apparatus which converts AC power into DC power by performing full wave rectification of AC power, applied to a first AC input terminal and a second AC input terminal, by a diode bridge element, comprising first and second diode bridge elements which have first and second input terminals, a positive pole output terminal, and a negative pole output terminal, wherein the first input terminal of the first diode bridge element and the first input terminal of the second diode bridge element are connected to the first AC input terminal, wherein the second input terminal of the first diode bridge element and the second input terminal of the second diode bridge element are connected to the second AC input terminal, wherein the positive pole output terminal of the first diode bridge element and the positive pole output terminal of the second diode bridge element are connected, and wherein the negative pole output terminal of the first diode bridge element and the negative pole output terminal of the second diode bridge element are connected.

In the power converter apparatus of the present invention, the first diode bridge element and the second diode bridge element are parallel-connected, and a diode bridge circuit is formed by these two diode bridge elements which are parallel-connected.

According to the power converter apparatus of the present invention, with letting two diodes, which are parallel-connected, be one set, a diode bridge circuit is formed using four sets of these. Hence, it is possible to decrease a forward current, which flows into one diode, to almost a half in comparison with a case of using only one diode bridge element. Therefore, since a forward voltage of one diode also decreases thereby, it is possible to reduce power loss in two diode bridge elements in comparison with a conventional apparatus which used only one diode bridge element. For this reason, it is possible to reduce useless power consumption more than a conventional example to achieve energy saving of electric equipment by applying the present invention to power supply units in various electric equipments.
FIG. 1 is a circuit diagram showing a power converter apparatus of a first embodiment of the present invention;
FIG. 2 is a circuit diagram showing a power converter apparatus of a second embodiment of the present invention; and
FIG. 3 is a circuit diagram showing a conventional power converter apparatus.

Hereafter, an embodiment of the present invention will be described with referring to drawings.

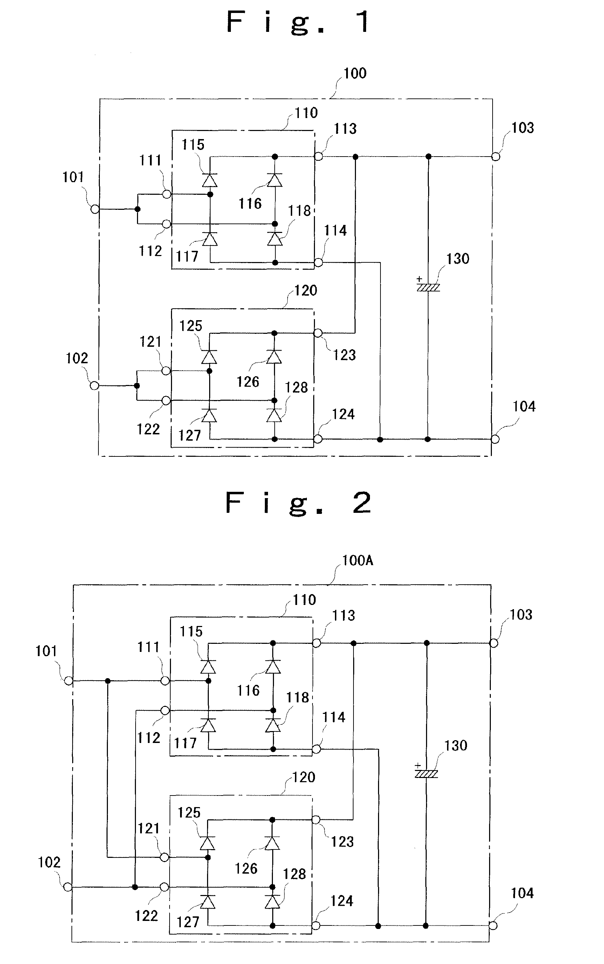

FIG. 1 is a circuit diagram showing a power converter apparatus of a first embodiment of the present invention. In the diagram, a power converter apparatus 100 comprises two diode bridge elements 110 and 120, and a smoothing electrolytic capacitor (hereafter, this is simply called a capacitor) 130.

The one diode bridge element 110 has two input terminals 111 and 112 and two output terminals 113 and 114 outside as everyone knows, and has four diodes 115 to 118 inside. The one input terminal 111 is connected to an anode of the diode 115, and a cathode of the diode 117, and the another input terminal 112 is connected to an anode of the diode 116, and a cathode of the diode 118. Furthermore, the positive pole output terminal 113 is connected to cathodes of the diodes 115 and 116, and the negative pole output terminal 114 is connected to anodes of the diodes 117 and 118.

Similarly, the another diode bridge element 120 has two input terminals 121 and 122 and two output terminals 123 and 124 outside, and has four diodes 125 to 128 inside. The one input terminal 121 is connected to an anode of the diode 125, and a cathode of the diode 127, and the another input terminal 122 is connected to an anode of the diode 126, and a cathode of the diode 128. Furthermore, the positive pole output terminal 123 is connected to cathodes of the diodes 125 and 126, and the negative pole output terminal 124 is connected to anodes of the diodes 127 and 128.

In addition, one input terminal 101 of the power converter apparatus 100 is connected to the two input terminals 111 and 112 of the one diode bridge element 110, and another input terminal 102 of the power converter apparatus 100 is connected to the two input terminals 121 and 122 of the another diode bridge element 120.

Furthermore, a positive pole output terminal 103 of the power converter apparatus 100 is connected to respective positive pole output terminals 113 and 123 of the two diode bridge elements 110 and 120, and a positive electrode terminal of the capacitor 130, and a negative pole output terminal 104 of the power converter apparatus 100 is connected to respective negative pole output terminals 114 and 124 of the two diode bridge elements 110 and 120, and a negative electrode terminal of the capacitor 130.

In the above-mentioned construction, inside the one diode bridge element 110, not only the diodes 115 and 116 are parallel-connected, but also the diodes 117 and 118 are parallel-connected. In addition, inside the another diode bridge element 120, not only the diodes 125 and 126 are parallel-connected, but also the diodes 127 and 128 are parallel-connected. With letting two diodes, which are parallel-connected, be one set in this way, a diode bridge circuit is formed using four sets of these. Hence, it is possible to decrease a forward current, which flows into one diode, to almost a half in comparison with a case of using only one diode bridge element. Therefore, since a forward voltage of one diode also decreases thereby, it is possible to reduce power loss in the two diode bridge elements 110 and 120 in comparison with a conventional example. For this reason, it is possible to reduce useless power consumption further than a conventional example to achieve energy saving of electric equipment by applying the present invention to power supply units in various electric equipments.

Furthermore, in the power converter apparatus 100 of the present invention, it is also possible to reduce heat generation in the diode bridge elements 110 and 120 because of the above-described reason. For this reason, when a heat radiator is provided in the diode bridge elements 110 and 120 in which large currents flow, it is possible to miniaturize a shape of a heat radiator further than the conventional.

FIG. 2 shows a power converter apparatus of a second embodiment of the present invention. In FIG. 2, the same components as those of the first embodiment mentioned above are expressed with the same reference numerals, and their explanation will be omitted. The power converter apparatus 100A of the second embodiment is different from that of the above-mentioned first embodiment only in a respect that one AC input terminal 101 is connected to one input terminal 111 of one diode bridge element 110, and one input terminal 121 of another diode bridge element 120, and another AC input terminal 102 is connected to another input terminal 112 of the one diode bridge element 110, and another input terminal 122 of the another diode bridge element 120.

Although it is possible to obtain almost the same effect even if the diode bridge elements 110 and 120 are parallel-connected simply like the second embodiment shown in FIG. 2, in this case, characteristics of the diodes inside the diode bridge elements 110 and 120 are different in the respective elements 110 and 120. For this reason, when the diodes of the different diode bridge elements 110 and 120 are parallel-connected, there is a possibility that a current may not be shunted into respective diodes which are parallel-connected equally, and hence, a trouble may be generated in the reduction of power loss.

On the other hand, since the diodes in the same diode bridge elements 110 and 120 are parallel-connected in the power converter apparatus 100 in the first embodiment shown in FIG. 1, the characteristics of the diodes which are parallel-connected are the same. Hence, it is possible to make a current equally shunted into these diodes which are parallel-connected, and to achieve the reduction of power loss as much as possible. That is, when the diodes inside the same diode bridge elements 110 and 120 are parallel-connected in this way, it is possible to reduce a forward current per diode to about a half of the conventional, and to achieve the reduction of a forward voltage determined by this current value. In consequence, it is possible to reduce the power loss generated in the diode bridge elements 110 and 120 further than those of the conventional example and the second embodiment.

## Claims

1. A power converter apparatus (100) which converts AC power into DC power by performing full wave rectification of AC power, applied to a first AC input terminal (101) and a second AC input terminal (102), by a diode bridge element, comprising:
first and second diode bridge elements (110, 120) which have first and second input terminals (111, 112, 121, 122), a positive pole output terminal (113, 123), and a negative pole output terminal (114, 124);
wherein the first input terminal (111) and second input terminal (112) of the first diode bridge element (110) are connected to the first AC input terminal (101);
wherein the first input terminal (121) and second input terminal (122) of the second diode bridge element (120) are connected to the second AC input terminal (102);
wherein the positive pole output terminal (113) of the first diode bridge element (110) and the positive pole output terminal (123) of the second diode bridge element (120) are connected; and
wherein the negative pole output terminal (114) of the first diode bridge element (110) and the negative pole output terminal (124) of the second diode bridge element (120) are connected.

2. A power converter apparatus (100A) which converts AC power into DC power by performing full wave rectification of AC power, applied to a first AC input terminal (101) and a second AC input terminal (102), by a diode bridge element, comprising:
first and second diode bridge elements (110, 120) which have first and second input terminals (111, 112, 121, 122), a positive pole output terminal (113, 123), and a negative pole output terminal (114, 124);
wherein the first input terminal (111) of the first diode bridge element (110) and the first input terminal (121) of the second diode bridge element (120) are connected to the first AC input terminal (101);
wherein the second input terminal (112) of the first diode bridge element (110) and the second input terminal (122) of the second diode bridge element (120) are connected to the second AC input terminal (102);
wherein the positive pole output terminal (113) of the first diode bridge element (110) and the positive pole output terminal (123) of the second diode bridge element (120) are connected; and
wherein the negative pole output terminal (114) of the first diode bridge element (110) and the negative pole output terminal (124) of the second diode bridge element (120) are connected.
